# EUROPEAN PATENT SPECIFICATION

(11) **EP 3 234 307 B1**
(45) Date of publication and mention of the grant of the patent: **20.11.2019**
(21) Application number: 14908573.0
(22) Date of filing: 17.12.2014
(51) Int. Cl.: E21B 47/06, E21B 21/08, E21B 37/00, E21B 49/00, G01L 11/00

(54) **METHOD OF PRESSURE TESTING A WELLBORE**
VERFAHREN ZUM DRUCKTESTEN EINES BOHRLOCHES
PROCÉDÉ DE TEST DE PRESSION D'UN PUITS DE FORAGE

(43) Date of publication of application: 25.10.2017
(60) Divisional application: 19202375.2
(73) Proprietor: National Oilwell DHT, L.P., Houston, TX 77036 (US)
(72) Inventor: VEENINGEN, Daniel Marco, Conroe, Texas 77304 (US)
(74) Representative: HGF Limited
(86) International application number: PCT/US2014/070827
(87) International publication number: WO 2016/099483

(56) References cited:
- US-A- 4 252 015
- US-A1- 2010 067 329
- US-A1- 2014 260 560
- US-A1- 2014 338 896
- US-B2- 8 004 421
- US-B2- 8 636 060

## Description

### CROSS-REFERENCE TO RELATED APPLICATIONS

None

### BACKGROUND

This disclosure relates generally to methods for testing subterranean wellbores. More specifically, this disclosure relates to methods for utilizing downhole pressure measurements to determine pressure gradients and wellbore pressure conditions.

Subterranean formations can generally be characterized as having a "formation pressure" and a "fracture pressure." The formation pressure is the pressure at which formation fluids are stored within the pores of the formation. The fracture pressure is the pressure at which the formation will yield or fracture. During conventional drilling, the total pressure applied on the wellbore, which is the drilling fluid's hydrostatic column plus any additional applied pressure from the surface, is generally maintained at a level above the formation pressure, to prevent formation fluids from flowing into the wellbore, and below the fracture pressure, to prevent damage to the formation.

Both the formation pressure and the fracture pressure change along the depth of the wellbore as hydrostatic pressure changes and different formations are encountered. To stabilize the wellbore, wellbores are often lined with pipes, known as casings or liners, which are cemented into place and isolate the wellbore from the surrounding formation. Casings and liners are conventionally installed in series with each successive casing or liner having a smaller inner diameter as compared to the casing or liner immediately above it.

When drilling an open wellbore into the formation below a newly installed casing or liner, one or more pressure tests may be performed to determine the formation pressure and/or the fracture pressure, or to verify the pressure integrity of the casing or liner to ensure that this wellbore reinforcement has been properly installed. These pressure tests may be referred to as formation integrity tests, leak-off tests, negative pressure tests, or pressure integrity tests. In general, the objective of each of these tests is to determine characteristics and integrity of the wellbore immediately beneath the newly installed casing or liner. For example, a leak-off test, or LOT, is used to determine the fracture pressure of the formation while a formation integrity test, or FIT, is used to determine the ability of the formation to handle a predetermined pressure.

Prior to performing a pressure test, rotation of the drill string is stopped and drilling mud is circulated through the wellbore to remove formation cuttings and debris from the wellbore. Removing formation cuttings and debris helps ensure that the wellbore contains a substantially homogenous fluid. Removing formation cuttings and debris from the wellbore is also important because, once circulation of drilling fluid has stopped, the formation cuttings and debris will settle to the bottom of the wellbore. The settling formation cuttings and debris may accumulate around the drill string and inhibit movement of the drill string once drilling is restarted. Because conventional pressure measurements are taken at the surface, they require the wellbore to be filled with a homogeneous fluid in order to calculate the pressure at the bottom of the wellbore based on pressure measurements taken at the surface.

Once circulation of drilling mud is complete, the wellbore annulus is sealed off and drilling mud is pumped into the wellbore, either through the drill string or alternatively into the annulus of the sealed wellbore, to increase wellbore pressure. The pumping of drilling mud continues until a predetermined wellbore pressure is achieved or it become evident that the point of formation fracturing has been reached and drilling mud is being lost into the formation. Once the predetermined wellbore pressure is achieved, pumping is stopped and the wellbore pressure is monitored. Monitoring the wellbore pressure allows an operator to determine a wide range of information, including, but not limited to, determining (a) if the wellbore has pressure integrity (in the case of a formation integrity test), (b) certain the formation characteristics, such as fracture propagation pressure, (c) the fracture initiation pressure (in the case of a leak-off test), (d) if wellbore fluids are entering the wellbore, and/or (e) if drilling mud is entering the formation.

As previously mentioned, during conventional wellbore pressure tests the wellbore pressure is determined by measuring the pressure at the surface and calculating downhole pressure using the known density of the drilling mud. Due primarily to the time needed to remove formation cuttings and debris from the wellbore through fluid circulation wellbore pressure tests can take several hours to complete. Further, even after fluid circulation cuttings and debris removal is rarely fully effective the fluid column in the wellbore is seldom homogeneous. This introduces inaccuracies as the fluid experiences both compression due to the increased pressure at depth and expansion due to the increased temperature. Finally, it is difficult to determine if accurate reading have been obtained by a single surface measurement gauge as this device may measure incorrectly in the absence of a plurality of reference sensors. US 20100067329A1 relates to a method of determining borehole conditions from distributed measurement data.

Thus, there is a continuing need in the art for methods for improving wellbore pressure tests by reducing the time needed to perform the test and increasing the accuracy of the test.

### BRIEF SUMMARY OF THE DISCLOSURE

A method comprises measuring a first external pressure within an annulus formed between a wellbore and a drill string disposed therein, where the first external pressure is measured by a first external pressure sensor. A fluid is pumped through the drill string into the annulus so as to move any cuttings in the annulus above the first external pressure sensor. A first internal pressure is measured within the drill string by a first internal pressure sensor. The first external pressure sensor is disposed between the first internal pressure sensor and a bottom of the wellbore. The method further includes determining a first fluid pressure gradient between the first internal pressure sensor and the first external pressure sensor and calculating a wellbore pressure at the bottom of the wellbore using the first fluid pressure gradient. A second external pressure within the annulus is measured using a second external pressure sensor and a third external pressure within the annulus is measured using a third external pressure sensor. The second external pressure sensor is disposed between the first external pressure sensor and the third external pressure sensor. The method further includes determining a second fluid pressure gradient between the first external pressure sensor, the second external pressure sensor, and the third external pressure sensor. The second fluid pressure gradient is monitored to determine the location of the cuttings in the annulus.

In certain embodiments, the fluid is a substantially homogeneous fluid and is disposed within the wellbore between the first internal pressure sensor and the bottom of the wellbore. In certain embodiments, the cuttings are disposed within the annulus above the first external pressure sensor. In certain embodiments, the cuttings are moved above the third external pressure sensor and the second fluid pressure gradient is monitored to determine a vertical location of the cuttings in the annulus between the first external pressure sensor and the third external pressure sensor. In certain embodiments, the method further comprises measuring an applied pressure at a location above the third external pressure sensor and determining a wellbore pressure using the applied pressure and the calculated wellbore pressure at the bottom of the wellbore. In certain embodiments, the method further comprises measuring a second internal pressure with a second internal pressure sensor, wherein the first internal pressure sensor is disposed between the second internal pressure sensor and the bottom of the wellbore, and using the second internal pressure, first internal pressure, and the first external pressure to determine the first pressure gradient. In certain embodiments, the wellbore pressure is determined as part of a formation integrity test, leak-off test, casing pressure test, or negative pressure test.

Also disclosed is a method comprising determining a first fluid pressure gradient between a first external pressure sensor and a first internal pressure sensor. The first external pressure sensor is disposed on a drill string so as to measure a first external pressure within an annulus between the drill string and a wellbore and the first internal pressure sensor is disposed on the drill string so as to measure a first internal pressure within the drill string. The first external pressure sensor is disposed between the first internal pressure sensor and a bottom of the wellbore. A fluid is pumped through the drill string into the annulus so as to move any cuttings in the annulus above the first external pressure sensor. A wellbore pressure at the bottom of the wellbore is calculated using the first fluid pressure gradient. A second fluid pressure gradient is calculated between the first external pressure sensor, a second external pressure sensor, and a third external pressure sensor. The second external pressure sensor and the third external pressure sensor are disposed on the drill string so as to measure pressure in the annulus. The second external pressure sensor is disposed between the first external pressure sensor and the third external pressure sensor. The second fluid pressure gradient is monitored to determine the location of the cuttings in the annulus.

Also disclosed is a method that comprises pumping a fluid through a drill string disposed in a wellbore and into an annulus between the drill string and the wellbore so as to move any cuttings in the annulus above a first external pressure sensor disposed on the drill string. A first external pressure is measured within the annulus with the first external pressure sensor. A wellbore pressure at a bottom of a wellbore is calculated using a first fluid pressure gradient, wherein the first fluid pressure gradient is determined using the first external pressure sensor and a first internal pressure sensor, and wherein the first external pressure sensor is disposed between the first internal pressure sensor and the bottom of the wellbore. A second fluid pressure gradient is calculated between the first external pressure sensor, a second external pressure sensor, and a third external pressure sensor, wherein the second external pressure sensor and the third external pressure sensor are disposed on the drill string so as to measure pressure in the annulus, and wherein the second external pressure sensor is disposed between the first external pressure sensor and the third external pressure sensor. The second fluid pressure gradient is monitored to determine the location of the cuttings in the annulus.

In certain embodiments, the fluid is a substantially homogeneous fluid and is disposed within the wellbore between the first internal pressure sensor and the bottom of the wellbore and wherein the cuttings are disposed within the annulus above the first external pressure sensor. In certain embodiments, the cuttings are moved above the third external pressure sensor and the method further comprises monitoring the second fluid pressure gradient to determine a vertical location of the cuttings in the annulus between the first external pressure sensor and the third external pressure sensor. In certain embodiments, the method further comprises measuring an applied pressure at a location above the third external pressure sensor; and determining an a wellbore pressure using the applied pressure and the calculated wellbore pressure at the bottom of the wellbore. In certain embodiments, the method further comprises measuring a second internal pressure with a second internal pressure sensor, wherein the first internal pressure sensor is disposed between the second internal pressure sensor and the bottom of the wellbore; and using the second internal pressure, first internal pressure, and the first external pressure to determine the first pressure gradient. In certain embodiments, the wellbore pressure is determined as part of a formation integrity test, leak-off test, casing pressure test, or negative pressure test.

### BRIEF DESCRIPTION OF THE DRAWINGS

For a more detailed description of the embodiments of the present disclosure, reference will now be made to the accompanying drawings, wherein:
Figure 1 is partial sectional view of a wellbore.
Figure 2 is a flowchart representing a method of wellbore testing.
Figures 3A-3D schematically illustrate circulation of a wellbore to prepare for pressure testing.
Figures 4A-4D show a graphical representation of pressure readings during the circulation shown in Figures 3A-3D.
Figures 5A-5D schematically illustrate pressure testing a wellbore.
Figures 6A-6D show a graphical representation of pressure readings during the circulation shown in Figures 5A-5D.

### DETAILED DESCRIPTION

It is to be understood that the following disclosure describes several exemplary embodiments for implementing different features, structures, or functions of the invention. Exemplary embodiments of components, arrangements, and configurations are described below to simplify the present disclosure; however, these exemplary embodiments are provided merely as examples and are not intended to limit the scope of the invention. Additionally, the present disclosure may repeat reference numerals and/or letters in the various exemplary embodiments and across the Figures provided herein. This repetition is for the purpose of simplicity and clarity and does not in itself dictate a relationship between the various exemplary embodiments and/or configurations discussed in the various figures. Moreover, the formation of a first feature over or on a second feature in the description that follows may include embodiments in which the first and second features are formed in direct contact, and may also include embodiments in which additional features may be formed interposing the first and second features, such that the first and second features may not be in direct contact. Finally, the exemplary embodiments presented below may be combined in any combination of ways, i.e., any element from one exemplary embodiment may be used in any other exemplary embodiment, without departing from the scope of the disclosure.

Additionally, certain terms are used throughout the following description and claims to refer to particular components. As one skilled in the art will appreciate, various entities may refer to the same component by different names, and as such, the naming convention for the elements described herein is not intended to limit the scope of the invention, unless otherwise specifically defined herein. Further, the naming convention used herein is not intended to distinguish between components that differ in name but not function. Additionally, in the following discussion and in the claims, the terms "including" and "comprising" are used in an open-ended fashion, and thus should be interpreted to mean "including, but not limited to." All numerical values in this disclosure may be exact or approximate values unless otherwise specifically stated. Accordingly, various embodiments of the disclosure may deviate from the numbers, values, and ranges disclosed herein without departing from the intended scope. Furthermore, as it is used in the claims or specification, the term "or" is intended to encompass both exclusive and inclusive cases, i.e., "A or B" is intended to be synonymous with "at least one of A and B," unless otherwise expressly specified herein.

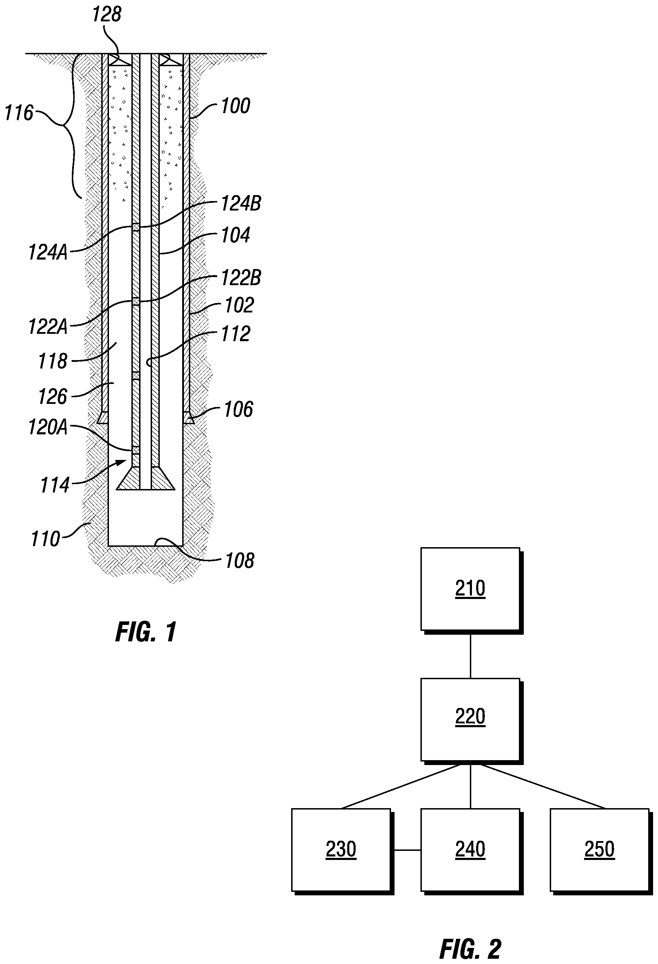

Referring initially to Figure 1, a wellbore 100 includes a casing string 102. A drill string 104 is disposed within the wellbore 100 and has extended the wellbore 100 below the casing shoe 106 so that the bottom 108 of the wellbore 100 is exposed to the surrounding formation 110. Drill string 104 includes an inner bore 112 and a plurality of drill string mounted pressure sensors 114. Each pressure sensor 114 may include both an internal and external pressure sensor. In certain embodiments, the drill string 104 may include wired drill pipe to facilitate transmission of data from the pressure sensors 114 to the surface.

Once the wellbore 100 is drilled out below the casing shoe 106, drilling fluid is circulated so that a substantially homogenous fluid 118 (the clean drilling fluid) displaces the heterogeneous fluid 116, which includes drilling mud, formation cuttings, and other debris, at distance upward through the wellbore. As discussed above, circulating the heterogeneous fluid 116 upward through the wellbore to reduce the potential for cuttings and other debris to settle and cause the drill string to become stuck in the wellbore. The heterogeneous fluid 116 may be displaced above the first external pressure sensor 120A, above the second external pressure sensor 122A, above the third external pressure sensor 124A, or at any other greater distance above the bottom 108 of the wellbore 100. In certain embodiments, the heterogeneous fluid 116 is circulated a sufficient distance above the bottom 108 of the wellbore 108 so that the cuttings and debris will not settle around critical drill string components in the time needed to conduct a pressure test.

The movement of the heterogeneous fluid 116 above the bottom 108 of the wellbore 100 can be tracked by monitoring pressure measured within the annulus 126 by the first external pressure sensor 120A, the second external pressure sensor 122A, and the third external pressure sensor 124A. Because the lower density homogeneous fluid 118 is being introduced from the drill string 104 at the bottom 108 of the wellbore 100, the pressure at each of the first external pressure sensor 120A, the second external pressure sensor 122A, and the third external pressure sensor 124A will remain constant until the homogeneous fluid 118 displaces the heterogeneous fluid 116 past the location of each of the individual pressure sensors. As the heterogeneous fluid 116 moves above each sensor, the pressure at that sensor will decrease.

With reference to Figures 1 and 2, once the heterogeneous fluid has been circulated a distance up the wellbore that will allow testing to be completed before drill string sticking becomes a concern, circulation can be stopped and a hydrostatic wellbore pressure data can be measured in step 210. The first step 210 includes determining the hydrostatic pressure at the bottom 108 of the wellbore 100 by measuring a first external pressure and a first internal pressure. The first internal pressure is measured within the inner bore 112 by the first internal pressure sensor 122B and a first external pressure within the annulus 126 is measured by the first external pressure sensor 120A, which is positioned between the first internal pressure sensor 122B and the bottom 108 of the wellbore 100.

Once the first internal pressure and first external pressure have been measured, then a first fluid pressure gradient can be determined in step 220. The vertical distance between the first external pressure sensor 120A and the first internal pressure sensor 122B is known. Therefore the first fluid pressure gradient can be determined by dividing the difference between the first internal pressure and the first external pressure by the distance between the first external pressure sensor 120A and the first internal pressure sensor 122B. In certain embodiments, additional internal and external pressure measurements can be taken to provide additional data points that can be used to determine the first fluid pressure gradient through fitting a curve or line among the several data points. In other embodiments, additional internal and external pressure measurements can be used to verify that each pressure measurement is accurate by comparing the measured pressure to the expected fluid pressure gradient. Utilizing multiple internal and external pressure measurements mitigates the reliance on a single gauge that may yield inaccurate measurements, which would be difficult to identify in the absence of verification using additional measurements. In certain embodiments, the first fluid pressure gradient can be determined between pressure measured by the first external pressure sensor 120A and a pressure sensor at the surface.

Determining the first fluid pressure gradient allows for hydrostatic pressure at the bottom 108 of the wellbore 100 to be calculated in step 230. Once the first fluid pressure gradient has been determined the hydrostatic pressure at the bottom 108 of the wellbore 100 can be calculated by extrapolating the first fluid pressure gradient from the first external pressure sensor 120A to the bottom 108 of the wellbore 100. Because the distance from the first external pressure sensor 120A to the bottom 108 of the wellbore 100 is relatively short, especially in comparison to the distance from the first external pressure sensor 120A to the surface, compression and expansion effects are negligible.

After the hydrostatic pressure at the bottom 108 of the wellbore 100 has been calculated, the annulus 126 can be sealed off, usually by the blowout preventer 128 at the upper end of the wellbore 100. Additional drilling fluid can then be pumped into the drill string 104 (or down the annulus below the BOP) to gradually increase the pressure within the wellbore 100. The first fluid pressure gradient determined under hydrostatic conditions will also apply when pumping additional fluids into the wellbore 100. With the drill string mounted pressure sensors 114 providing near real-time pressure data, the pressure at each pressure sensor 114 can be continuously monitored throughout the pressure test so that the pressure at the bottom 108 of the wellbore 100 can be continuously calculated and monitored.

In the case of a formation integrity test, the pressure at the bottom 108 of the wellbore 100 is monitored until reaching a pre-selected pressure and then monitored for a period of time to ensure that no drilling fluid escapes the wellbore 100. When doing a leak-off test the pressure at the bottom of the wellbore 100 is monitored as it increases until a deflection point is reached and the pressure begins to decrease, indicating a breakdown of the formation and loss of drilling fluid from the wellbore 100.

Once the first fluid pressure gradient has been determined in step 220 and the pressure at the bottom 108 of the wellbore 100 has been calculated in step 230, a wellbore pressure can also be determined in step 240 by measuring an applied pressure at a location above the third external pressure sensor 124A. In certain embodiments, the applied pressure can be measured at the blowout preventer 128 or at the inlet to the inner bore 112. The wellbore pressure can then be calculated by subtracting the applied pressure from the calculated pressure at the bottom 108 of the wellbore 100.

As the cuttings and other debris contained in heterogeneous fluid 116 are denser than the homogeneous fluid 118, the cuttings and other debris in heterogeneous fluid 116 will tend to settle toward the bottom 108 of the wellbore 100 once circulation of the drilling fluid is stopped. As previously discussed, if the cuttings and other debris are allowed to settle and build up near the bottom 108 of the wellbore 100 or around the drill string, the drill string may become stuck and be unable to rotate once the pressure testing is complete. Therefore, during pressure testing, it may be desirable to monitor the movement of the cuttings and other debris toward the bottom 108 of the wellbore 100.

To monitor the movement of the cuttings and other debris, a second fluid pressure gradient can be determined in step 250. To determine a second fluid pressure gradient, a second external pressure is measured at the second external pressure sensor 122A and a third external pressure is measured at the third external pressure sensor 124A. The second fluid pressure gradient can then be determined using the external pressure measured at each of the first external pressure sensor 120A, the second external pressure sensor 122A, and the third external pressure sensor 124A and the known distances between the pressure sensors. As previously mentioned, the pressure at each of the external pressure sensors will decrease as the cuttings and other debris moves below the pressure sensor, which will also cause the second pressure gradient to change as the cuttings and other debris move into the previously homogeneous fluid and increase its density. This changing second fluid pressure gradient can be monitored to determine where in the annulus 126 the cuttings and other debris are located and to indicate that circulation should be started should the cuttings and other debris near the bottom 108 of the wellbore 100.

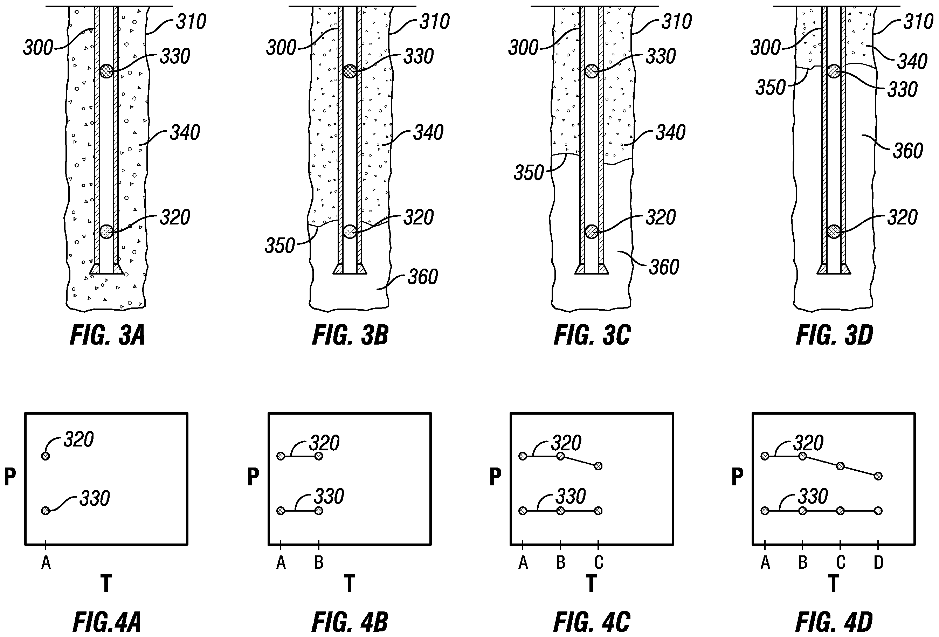

Referring now to Figures 3A-3D and 4A-4D, a drill string 300 is disposed within a wellbore 310. The drill string 300 includes a lower pressure sensor 320 and an upper pressure sensor 330. As shown in Figure 3A, the wellbore 310 is substantially filled with a drilling fluid containing cuttings 340. To prepare the wellbore 310 for pressure testing, drilling is stopped and the drill string is pulled upward a short distance from the bottom of the wellbore 310. As can be seen in Figure 4A, the measured pressure at lower pressure sensor 320 is higher than the measured pressure at upper pressure sensor 330. Referring now to Figure 3B, clean drilling fluid 360 is pumped down into the wellbore 310 through the drill string 300 to displace the cuttings 340 upward through the wellbore 310 to that the lowermost cuttings 350 are substantially even with the lower pressure sensor 320. Figure 4B shows that pressure measurements taken in this condition are substantially equal to those taken in the condition shown in Figure 3A.

As circulation of clean drilling fluid 360 continues, the cuttings 340 move upward until the lowermost cuttings 350 are between the upper pressure sensor 330 and the lower pressure sensor 320, as shown in Figures 3C and 3D. As illustrated in Figures 4C and 4D, the pressure measured by the lower pressure sensor 320 will decrease as the cuttings 340 are moved upward through the wellbore 310 and an increasing height of clean drilling fluid 360 is acting on the lower pressure sensor 320.

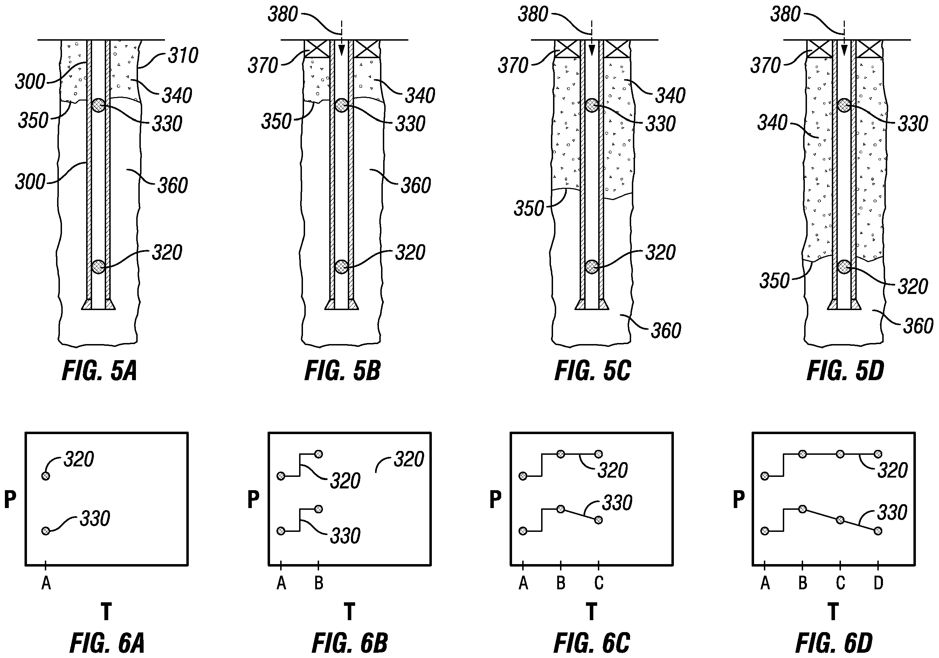

Referring now to Figures 5A-5D and 6A-6D, the movement of cuttings 340 during a wellbore pressure test is illustrated along with the effect that movement has on pressure measurements within the wellbore 310. In Figure 5A, the drill string 300 is disposed within the wellbore 310 in essentially the same conditions as shown in Figure 3D with the lowermost cuttings 350 at or above the upper pressure sensor 330. To begin the wellbore pressure test (Figure 5B), an annulus seal 370 is engaged to close the annulus and fluid pressure 380 is applied to the drill string 300. As shown in Figure 6B, the pressure at the upper pressure sensor 330 and the lower pressure sensor 320 both increase an amount equal to the applied fluid pressure 380.

As the pressure test continues the cuttings 340 move downward into the previously clean drilling fluid 360, as shown in Figures 5C and 5D. This movement increases the density of the drilling fluid in the lower portion of the wellbore 310 but decreases the density of the fluid in the upper portion of the wellbore 310. As illustrated in Figures 6C and 6D, the pressure measured by the lower pressure sensor 320 will remain constant as the cuttings 340 settle within the wellbore 310 but the pressure measured by the upper pressure sensor 330 will decrease as more of the cuttings 340 move below the upper pressure sensor 330.

The embodiments described herein make reference to a vertical wellbore but it is understood that the principals and methods described herein are equally applicable to deviated and horizontal wellbores. Any references to depth or vertical depth herein are understood to mean "true vertical depth" or the depth measured in line with the gravitational force.

While the disclosure is susceptible to various modifications and alternative forms, specific embodiments thereof are shown by way of example in the drawings and description.

## Claims

1. A method comprising:
determining a first fluid pressure gradient between a first external pressure sensor (120A) and a first internal pressure sensor (122B), wherein the first external pressure sensor (120A) is disposed on a drill string (104) so as to measure a first external pressure within an annulus (126) between the drill string (104) and a wellbore (100), wherein the first internal pressure sensor (122B) is disposed on the drill string (104) so as to measure a first internal pressure within the drill string (104), and wherein the first external pressure sensor (120A) is disposed between the first internal pressure sensor (120B) and a bottom of the wellbore (100);
pumping a fluid through the drill string (104) into the annulus (126) so as to move any cuttings in the annulus (126) above the first external pressure sensor (120A), so that the first external pressure decreases in response of the fluid being pumped;
calculating a wellbore pressure at the bottom of the wellbore (100) using the first fluid pressure gradient;
calculating a second fluid pressure gradient between the first external pressure sensor (120A), a second external pressure sensor (122A), and a third external pressure sensor (124A), wherein the second external pressure sensor (122A) and the third external pressure sensor (124A) are disposed on the drill string (104) so as to measure pressure in the annulus (126), and wherein the second external pressure sensor (122A) is disposed between the first external pressure sensor (120A) and the third external pressure sensor (124A);
monitoring the second fluid pressure gradient to determine a location of the cuttings (340) in the annulus (126); and
circulating a fluid through the annulus (126) upon the determined location indicating that the cuttings (340) are nearing the bottom of the wellbore (100).

2. The method of claim 1, wherein the fluid is a substantially homogeneous fluid and is disposed within the wellbore (100) between the first internal pressure sensor (122B) and the bottom of the wellbore (100) and wherein the cuttings (340) are disposed within the annulus (126) above the first external pressure sensor (120A).

3. The method of claim 1 or claim 2, wherein the cuttings (340) are moved above the third external pressure sensor (124A) and the second fluid pressure gradient is monitored to determine a vertical location of the cuttings (340) in the annulus (126) between the first external pressure sensor (120A) and the third external pressure sensor (124A).

4. The method of any of claims 1 to 3, further comprising:
measuring an applied pressure at a location above the third external pressure sensor (124A); and
determining a wellbore pressure using the applied pressure and the calculated wellbore pressure at the bottom of the wellbore (100).

5. The method of any of claims 1 to 4, further comprising:
measuring a second internal pressure with a second internal pressure sensor (122A), wherein the first internal pressure sensor (120A) is disposed between the second internal pressure sensor (122A) and the bottom of the wellbore (100) ; and
using the second internal pressure, first internal pressure, and the first external pressure to determine the first pressure gradient.

6. The method of any of claims 1 to 5, wherein the wellbore pressure is determined as part of a formation integrity test, leak-off test, casing pressure test, or negative pressure test, the method further comprising sealing off the annulus (126) after the pressure of the bottom of the wellbore (100) is determined.

7. The method of any of claims 1 to 6, wherein the first fluid pressure gradient is determined by dividing the difference between a first external pressure measured by the first external pressure sensor (122B) and a first internal pressure measured by the first internal pressure sensor (122A), by the vertical distance between the first external pressure sensor (122B) and the first internal pressure sensor (122A).

## Patentansprüche

1. Verfahren, umfassend:
ein Bestimmen eines ersten Fluiddruckgradienten zwischen einem ersten Außendrucksensor (120A) und einem ersten Innendrucksensor (122B), wobei der erste Außendrucksensor (120A) an einem Bohrstrang (104) angeordnet ist, um einen ersten Außendruck innerhalb eines Ringspalts (126) zwischen dem Bohrstrang (104) und einem Bohrloch (100) zu messen, wobei der erste Innendrucksensor (122B) auf dem Bohrstrang (104) angeordnet ist, um einen ersten Innendruck innerhalb des Bohrstrangs (104) zu messen, und wobei der erste Außendrucksensor (120A) zwischen dem ersten Innendrucksensor (120B) und einem Boden des Bohrlochs (100) angeordnet ist;
ein Pumpen eines Fluids durch den Bohrstrang (104) in den Ringspalt (126), um jeden Bohrschmant im Ringspalt (126) über den ersten Außendrucksensor (120A) zu bewegen, damit der erste Außendruck als Reaktion auf das zu pumpende Fluid abnimmt;
ein Berechnen eines Bohrlochdrucks am Boden des Bohrlochs (100) durch Verwenden des ersten Fluiddruckgradienten;
ein Berechnen eines zweiten Fluiddruckgradienten zwischen dem ersten Außendrucksensor (120A), einem zweiten Außendrucksensor (122A) und einem dritten Außendrucksensor (124A), wobei der zweite Außendrucksensor (122A) und der dritte Außendrucksensor (124A) am Bohrstrang (104) angeordnet werden, um den Druck im Ringspalt (126) zu messen, und wobei der zweite Außendrucksensor (122A) zwischen dem ersten Außendrucksensor (120A) und dem dritten Außendrucksensor (124A) angeordnet wird;
ein Überwachen des zweiten Fluiddruckgradienten, um eine Position des Bohrschmants (340) im Ringspalt (126) zu bestimmen; und
ein Umwälzen eines Fluids durch den Ringspalt (126) an der bestimmten Stelle, was anzeigt, dass sich der Bohrschmant (340) dem Boden des Bohrlochs (100) nähert.

2. Verfahren nach Anspruch 1, wobei das Fluid ein im Wesentlichen homogenes Fluid ist und innerhalb des Bohrlochs (100) zwischen dem ersten Innendrucksensor (122B) und dem Boden des Bohrlochs (100) angeordnet wird, und wobei der Bohrschmant (340) innerhalb des Ringspalts (126) oberhalb des ersten Außendrucksensors (120A) angeordnet wird.

3. Verfahren nach Anspruch 1 oder Anspruch 2, wobei der Bohrschmant (340) über den dritten Außendrucksensor (124A) bewegt wird und der zweite Fluiddruckgradient überwacht wird, um eine vertikale Position des Bohrschmants (340) im Ringspalt (126) zwischen dem ersten Außendrucksensor (120A) und dem dritten Außendrucksensor (124A) zu bestimmen.

4. Verfahren nach einem der Ansprüche 1 bis 3, das des Weiteren umfasst:
ein Messen eines aufgebrachten Drucks an einer Stelle oberhalb des dritten Außendrucksensor (124A); und
ein Bestimmen eines Bohrlochdrucks durch Verwenden des aufgebrachten Drucks und des berechneten Bohrlochdrucks am Boden des Bohrlochs (100).

5. Verfahren nach einem der Ansprüche 1 bis 4, das des Weiteren umfasst:
ein Messen eines zweiten Innendrucks mit einem zweiten Innendrucksensor (122A), wobei der erste Innendrucksensor (120A) zwischen dem zweiten Innendrucksensor (122A) und dem Boden des Bohrlochs (100) angeordnet wird; und
ein Verwenden des zweiten Innendrucks, des ersten Innendrucks und des ersten Außendrucks, um den ersten Druckgradienten zu bestimmen.

6. Verfahren nach einem der Ansprüche 1 bis 5, wobei der Bohrlochdruck als Teil eines Integritätstests einer Formation, eines Dichtigkeitstests, eines Gehäusedrucktests oder Unterdrucktests bestimmt wird, wobei das Verfahren des Weiteren ein Abdichten des Ringspalts (126) umfasst, nachdem der Bodendruck des Bohrlochs (100) bestimmt wurde.

7. Verfahren nach einem der Ansprüche 1 bis 6, wobei der erste Fluiddruckgradient durch ein Teilen der Differenz zwischen einem ersten Außendruck, der durch den ersten Außendrucksensor (122B) gemessen wird, und einem ersten Innendruck, der durch den ersten Innendrucksensor (122A) gemessen wird, durch den vertikalen Abstand zwischen dem ersten Außendrucksensor (122B) und dem ersten Innendrucksensor (122A) bestimmt wird.

## Revendications

1. Procédé comprenant :
la détermination d'un premier gradient de pression de fluide entre un premier capteur de pression externe (120A) et un premier capteur de pression interne (122B), ledit premier capteur de pression externe (120A) étant disposé sur un train de tiges de forage (104) de façon à mesurer une première pression externe dans un espace annulaire (126) entre le train de tiges de forage (104) et un puits de forage (100), ledit premier capteur de pression interne (122B) étant disposé sur le train de tiges de forage (104) de façon à mesurer une première pression interne dans le train de tiges de forage (104), et ledit premier capteur de pression externe (120A) étant disposé entre le premier capteur de pression interne (120B) et le fond du puits de forage (100) ;
le pompage d'un fluide à travers le train de tiges de forage (104) dans l'espace annulaire (126) de façon à déplacer les déblais de l'espace annulaire (126) au-dessus du premier capteur de pression externe (120A), afin que la première pression externe diminue en réponse au fluide étant pompé ;
le calcul d'une pression de puits de forage au niveau du fond du puits de forage (100) à l'aide du premier gradient de pression de fluide ;
le calcul d'un second gradient de pression de fluide entre le premier capteur de pression externe (120A), un deuxième capteur de pression externe (122A) et un troisième capteur de pression externe (124A), ledit deuxième capteur de pression externe (122A) et ledit troisième capteur de pression externe (124A) étant disposés sur le train de tiges de forage (104) de façon à mesurer la pression dans l'espace annulaire (126) et ledit deuxième capteur de pression externe (122A) étant disposé entre le premier capteur de pression externe (120A) et le troisième capteur de pression externe (124A) ;
la surveillance du second gradient de pression de fluide pour déterminer un emplacement des déblais (340) dans l'espace annulaire (126) ;
et la mise en circulation d'un fluide à travers l'espace annulaire (126) lorsque l'emplacement déterminé indique que les déblais (340) s'approchent du fond du puits de forage (100).

2. Procédé selon la revendication 1, ledit fluide étant un fluide sensiblement homogène et étant disposé dans le puits de forage (100) entre le premier capteur de pression interne (122B) et le fond du puits de forage (100) et lesdits déblais (340) étant disposés à l'intérieur de l'espace annulaire (126) au-dessus du premier capteur de pression externe (120A).

3. Procédé selon la revendication 1 ou 2, lesdits déblais (340) étant déplacés au-dessus du troisième capteur de pression externe (124A) et ledit second gradient de pression de fluide étant surveillé pour déterminer un emplacement vertical des déblais (340) dans l'espace annulaire (126) entre le premier capteur de pression externe (120A) et le troisième capteur de pression externe (124A).

4. Procédé selon l'une quelconque des revendications 1 à 3, comprenant en outre :
la mesure d'une pression appliquée au niveau d'un emplacement au-dessus du troisième capteur de pression externe (124A) ; et
la détermination d'une pression de puits de forage à l'aide de la pression appliquée et de ladite pression de puits de forage calculée au niveau du fond du puits de forage (100).

5. Procédé selon l'une quelconque des revendications 1 à 4, comprenant en outre :
la mesure d'une seconde pression interne avec un deuxième capteur de pression interne (122A), ledit premier capteur de pression interne (120A) étant disposé entre le deuxième capteur de pression interne (122A) et le fond du puits de forage (100) ; et
l'utilisation de la seconde pression interne, de la première pression interne et de la première pression externe pour déterminer le premier gradient de pression.

6. Procédé selon l'une quelconque des revendications 1 à 5, ladite pression dans le puits de forage étant déterminée en tant que partie d'un test d'intégrité de la formation, d'un test d'étanchéité, d'un test de pression de tubage ou d'un test de pression négative, le procédé comprenant en outre le scellement de l'espace annulaire (126) après que la pression du fond du puits de forage (100) est déterminée.

7. Procédé selon l'une quelconque des revendications 1 à 6, ledit premier gradient de pression de fluide étant déterminé en divisant la différence entre une première pression externe mesurée par le premier capteur de pression externe (122B) et une première pression interne mesurée par le premier capteur de pression interne (122A), par la distance verticale entre le premier capteur de pression externe (122B) et le premier capteur de pression interne (122A).
